(19) Europäisches Patentamt
European Patent Office
Office européen des brevets

(11) **EP 0 801 635 B2**

(12) **NOUVEAU FASCICULE DE BREVET EUROPEEN**
Après la procédure d'opposition

(45) Date de publication et mention de la décision concernant l'opposition:
**10.02.2010 Bulletin 2010/06**

(45) Mention de la délivrance du brevet:
**02.07.2003 Bulletin 2003/27**

(21) Numéro de dépôt: **96937395.0**

(22) Date de dépôt: **05.11.1996**

(51) Int Cl.:
***C03C 25/10*** *(2006.01)*

(86) Numéro de dépôt international:
**PCT/FR1996/001735**

(87) Numéro de publication internationale:
**WO 1997/017305 (15.05.1997 Gazette 1997/21)**

(54) **PROCEDE ET DISPOSITIF POUR LA CENTRIFUGATION LIBRE DE FIBRES MINERALES**

VERFAHREN UND VORRICHTUNG FÜR FREIE ZENTRIFUGATION VON MINERALFASERN

FREE MINERAL FIBRE CENTRIFUGING METHOD AND DEVICE

(84) Etats contractants désignés:
**AT CH DE DK ES FI FR GB LI NL SE**

(30) Priorité: **06.11.1995 FR 9513070**
**06.11.1995 FR 9513069**

(43) Date de publication de la demande:
**22.10.1997 Bulletin 1997/43**

(73) Titulaire: **SAINT-GOBAIN ISOVER**
**92400 Courbevoie (FR)**

(72) Inventeur: **YANG, Alain**
**F-60290 Rantigny (FR)**

(74) Mandataire: **Muller, René et al**
**SAINT-GOBAIN RECHERCHE,**
**39, quai Lucien Lefranc-BP 135**
**93303 Aubervilliers Cédex (FR)**

(56) Documents cités:
**EP-A- 0 439 385    EP-A1- 0 367 194**
**EP-A1- 0 374 112    EP-A1- 0 797 547**
**WO-A-91/10626    WO-A-95/00453**
**WO-A1-88/07980    WO-A1-2004/002913**
**DE-A1- 3 940 896    FR-A- 1 495 189**
**GB-A- 1 169 034    US-A- 1 350 202**
**US-A- 2 058 309    US-A- 4 342 582**

• **RESEARCH DISCLOSURE, no. 358, Février 1994, HAVANT GB, page 72 XP000439799 ANONYMOUS: "METHOD OF PRODUCTION"**
• **Ryhänen, Jari Juhani: "Hartsiliukosen pisaroituminen ja jakautuminen 3-faasisysteemissä", Master's Thesis, chapter 2, available for public 10.8.1990**
• **Translation of essential parts of D2.**

**EP 0 801 635 B2**

**EP 0 801 635 B2**

**Description**

L'invention concerne les techniques de fabrication de fibres minérales dites à centrifugation externe ou à centrifugation libre, elle concerne plus particulièrement le soufflage destiné à entraîner les fibres et l'apport du liant qui les associe les unes aux autres.

L'invention a trait aux techniques de production de laine de roche destinée par exemple à servir de matière de base à des produits isolants thermiques et/ou acoustiques. Plus précisément, l'invention concerne un perfectionnement à la technique de fibrage d'une matière étirable à haut point de fusion, par exemple du type verre basaltique, laitiers de hauts fourneaux ou autres matériaux équivalents, selon laquelle la matière à fibrer est déversée à l'état fondu sur la bande périphérique de roues de centrifugation mues en rotation, est accélérées par ces roues, s'en détache et est transformée pour partie en fibres sous l'effet de la force centrifuge, un courant gazeux émis tangentiellement à la bande périphérique des roues séparant de la matière infibrée les fibres ainsi formées et les entraînant vers une réception.

La technique de fibrage ci-dessus brièvement évoquée, connue par exemple des demandes de brevets européens 59 152 et 195 725, est dite exclusivement à centrifugation libre, ce qui rappelle à la fois que le verre fondu n'est pas divisé en une série de filets élémentaires (centrifugation interne) ni soumis à un étirage gazeux par un courant de gaz à température et vitesse élevées. Cette technique de fibrage est très utile, en particulier car c'est pratiquement la seule à pouvoir être utilisée dans des conditions intéressantes du point de vue économique avec des matériaux comme des laitiers basaltiques qui se caractérisent par des températures de fusion bien plus élevées que les verres sodo-calciques usuels.

Dans ce procédé de fibrage, les fibres sont transportées hors du voisinage immédiat de la machine de fibrage par un courant gazeux tangentiel émis à la périphérie des roues de centrifugation dans une direction essentiellement parallèle aux axes des roues ; l'accélération par les roues de centrifugation communique aux particules infibrées toujours présentes parmi les fibres une vitesse suffisante pour que le courant gazeux périphérique n'ait pas d'effet significatif sur la trajectoire de ces particules ce qui conduit à un tri d'avec les fibres qui sont par contre déviées en raison de leur moindre densité et moindre vélocité.

L'invention concerne un dispositif conforme à celui décrit dans le brevet européen EP-B 439 385. Ce dispositif comprend une série de roues de centrifugation disposées suivant un assemblage mettant leurs surfaces périphériques à proximité les unes des autres, elles sont animées en rotation rapide par des moteurs disposés de côté, à l'extérieur de l'ensemble constitué par la série des roues de centrifugation et qui entraînent lesdites roues au moyen d'organes de transmission mécanique disposés de manière à dégager la zone au milieu de la série de roues de centrifugation. Deux roues consécutives sur le trajet du matériau à fibrer tournent en sens inverse, une alimentation en matériau fondu est montée de façon à laisser se déverser ledit matériau sur la surface extérieure de la première roue de centrifugation, un premier organe de soufflage engendrant autour de la série de roues de centrifugation un courant gazeux, parallèle aux axes de rotation desdites roues de centrifugation et un second organe de soufflage générant un courant gazeux auxiliaire, à distance des roues de centrifugation et sensiblement dans la même direction que le courant gazeux principal.

Les dispositifs du type précédent sont équipés de systèmes d'alimentation en un liant liquide destiné après séchage et/ou polymérisation à associer mécaniquement les fibres les unes aux autres pour constituer un matelas fibreux.

Un problème délicat est celui de la répartition du liant au sein du matelas. Pour distribuer le liant et le répartir de manière homogène parmi les fibres plusieurs techniques ont été proposées. Le brevet européen EP-B-59 152 propose ainsi d'introduire au centre des roues de centrifugation le liant liquide et de le laisser être expulsé par la force centrifuge à partir d'une fente annulaire à une certaine distance de la périphérie de la roue. Les gouttes de liant ainsi expulsées radialement rencontrent les fibres qui sont projetées, elles, parallèlement à l'axe de la roue. Ce système est très efficace mais il a ses limites. D'une part, le rendement n'est pas maximal, c'est-à-dire que le pourcentage de liant réellement utilisé est sensiblement inférieur à 100. En effet,-les fibres ne sont pas créées et extraites sur toute la périphérie des roues de centrifugation, elles n'occupent en général qu'au maximum, les trois-quarts de la périphérie. Sur le quart restant, du liant est expulsé qui n'a que peu de chances de rencontrer des fibres. Une autre limite de cette technique est dans la durée très courte pendant laquelle une goutte de liant a une probabilité de rencontrer une ou plusieurs fibres. Les deux courants en forme de nappes, celui des gouttes de liant et celui des fibres étant orthogonaux et minces, la zone où ils se coupent occupe un volume très faible. L'invention se donne pour tâche d'améliorer la technique du brevet EP-B-59 152.

Le brevet européen EP-B-439 385 décrit une technique de centrifugation libre dans laquelle on ajoute au courant gazeux principal issu de fentes circulaires entourant au moins partiellement la circonférence des roues de centrifugation, un courant gazeux auxiliaire notamment issu d'une couronne de buses. Cette technique est très utile pour contrôler très précisément les conditions de transport des fibres vers l'organe récepteur ce qui a pour conséquence une amélioration de la qualité des matelas de matériaux isolants obtenus et cela de deux points de vue : abaissement du taux de particules infibrées et accroissement de la résistance thermique. Dans ce document, cependant, aucune étude n'a été faite sur la répartition du liant issu par centrifugation d'une fente annulaire sur la face latérale avant de la roue de centrifugation. C'est l'amélioration de cette répartition que l'invention se donne pour mission de réaliser.

Des techniques ont été proposées pour maîtriser la répartition du liant dans les différentes couches constituant le matelas de fibres. La demande de brevet européen EP-A-374 112 propose d'ajouter à la source de liant au centre des rotors des conduits placés en certains endroits spécifiques de manière à ce que certaines zones de « la suspension des fibres en formation » qui correspondent à des strates particulières du matelas reçoivent des quantités ou des natures de liant spécifiques ce qui permet d'obtenir une répartition hétérogène maîtrisée du liant dans le matelas, certaines strates, notamment les faces externes du matelas, étant par exemple, revêtues de beaucoup de liant tandis que d'autres, comme la partie centrale, en sont moins pourvues. Le but que l'invention cherche à atteindre est à l'opposé de celui de EP-A-374 112 puisqu'il s'agit au contraire ici de rechercher la répartition de liant la plus homogène possible dans toute l'épaisseur du matelas.

D'une manière générale, lorsque dans un matelas de fibres minérales dites de roche ou de verre la répartition du liant n'est pas homogène, cela conduit à une dégradation de la qualité de deux points de vue, qualité visuelle et qualité mécanique.

Les résines utilisées comme liants sont en général colorées ce qui donne aux produits de chaque fabricant une couleur spécifique et permet par ailleurs de constater en production quelle est la répartition du liant parmi les fibres.

Lorsque la répartition n'est pas satisfaisante, il apparaît sur le matelas terminé des zones plus claires correspondant à des groupes de fibres non liées. Il s'agit là d'un défaut d'aspect mais qui dans certains cas pourrait avoir des conséquences techniques : là où le manque de liant est très important, la cohésion des fibres est insuffisante et le matelas risque de se délaminer plus facilement. La mission que se donne l'invention est d'améliorer la répartition régulière du liant dans le matelas.

Pour ce faire, l'invention propose un procédé de formation de fibres minérales tel que défini en revendication 1.

Selon un mode de réalisation de l'invention, l'apport de liant dans le courant gazeux auxiliaire se fait principalement en dessous des roues de centrifugation fibreuses.

Selon une variante préférée de l'invention, la majeure partie du liant est introduite au centre des roues de centrifugation et répartie par force centrifuge.

Selon un mode de réalisation de l'invention, de l'ordre de 30 % du liant liquide est introduit par l'intérieur de courants gazeux auxiliaires et le reste par le centre de roues de centrifugation.

Selon une variante de l'invention, le courant gazeux auxiliaire est constitué de courants individuels dont notamment certains sont des courants tournants.

Ces courants tournants améliorent sensiblement la répartition du liant issu de la paroi des roues de centrifugation sur le matelas et dans son épaisseur ainsi que la structure même de celui-ci.

L'invention propose également un dispositif pour mettre en oeuvre l'invention tel que défini en revendication 6. Dans ce dispositif certaines des buses situées autour de la fente peuvent comporter des guides rotatifs.

Trois exemples de guides sont donnés, ou bien ce sont des vis d'Archimède, ou bien ils sont faits d'une tige hélicoïdale, ou encore ils comportent une pale mobile entraînée en rotation.

Il est également prévu qu'un tube d'alimentation en liant soit incorporé aux guides rotatifs.

Avantageusement, la majeure partie du liant est introduite au centre de roues de centrifugation et répartie par force centrifuge. Et notamment, de l'ordre de 30 % du liant liquide est introduit par l'intérieur de courants gazeux auxiliaires et le reste par le centre de roues de centrifugation.

La description et les figures permettront de comprendre l'invention et d'en apprécier les avantages :

- la figure 1 représente une machine de centrifugation externe selon l'invention,
- la figure 2 montre un dispositif de distribution de liant, et
- la figure 3, le même avec en plus, un dispositif de soufflage selon l'invention.

Une installation de fabrication de fibres minérales par centrifugation libre comporte en général les éléments suivants : un réacteur de fusion des matières premières qui distribue un ou plusieurs filets verticaux de matières vitreuses fondues, une ou plusieurs machines de fibrage alimentées chacune par un filet, les machines produisent les fibres et les arrosent d'un liant liquide. Les fibres sont reçues sur un tapis transporteur et passent, lorsque le matelas est constitué, dans une étuve où la prise du liant est réalisé.

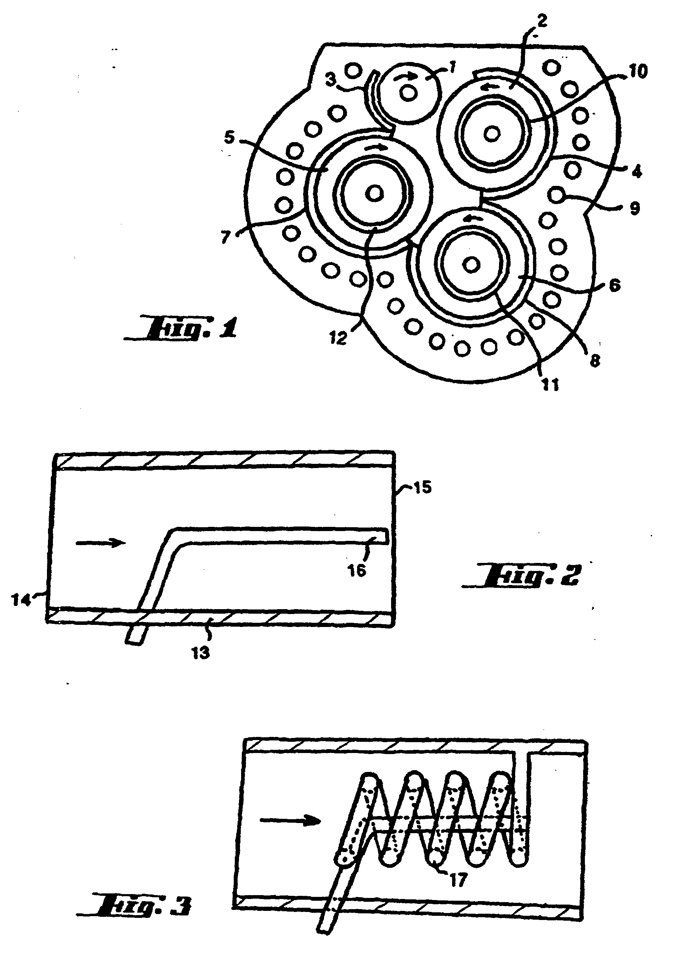

Le réacteur de fusion est le plus souvent un cubilot alimenté en roches naturelles ou en produits industriels comme des laitiers de hauts fourneaux. Ce cubilot produit un verre à une température de l'ordre de 1500°C. Le filet coule sur la machine de fibrage de la figure 1, il tombe sur une première roue de centrifugation 1 d'où la matière en fusion est expulsée vers la roue numéro 2. La première roue, comme les autres, est entourée, sur la machine elle-même d'une fente 3 par où un gaz est expulsé. Il sert à refroidir la roue 1. Une partie de la matière en fusion reçue par la roue 2 est arrachée de sa surface par le courant d'air issu de la fente 4 et elle constitue des fibres qui sont projetées dans une direction sensiblement parallèle à l'axe de la roue de centrifugation 2. La matière restante non fibrée est expulsée vers la roue de centrifugation 5 et ainsi de suite. Comme la roue 2, chacune des roues 5 et 6 possède une fente, respectivement 7 et 8 par où du gaz est expulsé tangentiellement à la périphérie de la roue pour étirer et expulser les fibres, la vitesse des gaz est de l'ordre de 100 m/sec. Ces gaz autour des roues de centrifugation fibreuse 2, 5, 6 constituent le courant gazeux principal qui transportera les fibres vers le tapis transporteur où elles seront recueillies pour former un lit de fibres. Ce lit de fibres constitue le matelas final ou au moins l'un des éléments de celui-ci.

Sur la figure 1 on voit en 9 des buses par où des gaz sont également soufflés pour constituer un courant gazeux auxiliaire. Ces buses constituent une couronne et, comme il est expliqué dans le brevet EP-B-438 385, le courant gazeux auxiliaire permet d'obtenir une bonne répartition et une bonne orientation des fibres sur le tapis récepteur.

De manière traditionnelle, le liant destiné - après sa prise - à associer mécaniquement les fibres les unes aux autres est expulsé des roues de centrifugation elles-mêmes par des fentes circulaires 10, 11, 12.

Le dispositif de l'invention est mis en oeuvre dans les buses 9. Ce dispositif comporte deux éléments qui, chacun pour sa part, participent au résultat. Ce sont les guides rotatifs et les arrivées de liant.

Parlons de ces dernières tout d'abord. Il s'agit de tubes, sensiblement concentriques à certaines des buses 9 de la couronne du courant gazeux auxiliaire. La figure 2 présente une telle buse équipée du tube d'amenée de liant. La buse 13 est montée par son extrémité 14 sur la machine de fibrage, c'est un conduit tubulaire d'un diamètre de par exemple 40 mm dans lequel les gaz sont expulsés à des vitesses de l'ordre de 70 m/sec. Un tube 16, de préférence dans l'axe de la sortie 15 de la buse permet d'amener le liant au milieu du courant gazeux qui transite par la buse 13.

Des essais ont été faits pour amener le liant en divers endroits de la couronne du courant gazeux auxiliaire de la figure 1. On a constaté que la répartition du liant dans le matelas de fibres est nettement améliorée lorsque l'apport accessoire de liant se fait en bas de trois rotors fibreurs 2, 5 et 6 et en particulier du premier 2 et du deuxième 5. Ces arrivées de liant associées à certaines des buses de la couronne ne servent pas à apporter tout le liant. On a constaté que les meilleures conditions étaient celles dans lesquelles 30 % seulement est fourni sur la couronne, le reste est - de manière traditionnelle - expulsé du centre des roues 10, 11, 12.

Sur la figure 3, on a représenté une buse équipée, non seulement de son arrivée de liant mais également d'un guide rotatif. Ces deux dispositifs sont indépendants et chacun, seul, est efficace. Le guide rotatif est destiné à provoquer une rotation du courant gazeux auxiliaire issu des buses telles que 9 sur la figure 1. Le système représenté figure 3 est du type « tire-bouchon », c'est-à-dire qu'à l'intérieur de la buse, concentrique à celle-ci on a placé une tige métallique 17 en forme d'hélice. Lorsque les gaz canalisés par la buse rencontrent la tige hélicoïdale à grande vitesse (par exemple 70 m/s) ils sont mis en rotation autour de l'axe de la buse. D'autres dispositifs équivalents ont été essayés, notamment une vis d'Archimède fixe, son axe coïncidant avec l'axe de la buse et même, un système de pale mobile autour de l'axe de la buse, la pale ayant une forme légèrement hélicoïdale qui lui permet d'entrer en rotation lorsque le débit de gaz est installé. Tous ces guides rotatifs permettent la mise en rotation de certains au moins des courants gazeux auxiliaires.

Pour apprécier l'efficacité des moyens précédents, on a fait de nombreux essais comparatifs. Pour chaque moyen, guide rotatif d'une part et arrivée centrale de liant de l'autre, ainsi que pour la combinaison des deux on a produit, dans des conditions identiques des quantités importantes de laine de roche et on a comparé les résultats.

Les paramètres de la production à maintenir identiques pour deux essais destinés à être comparés étaient essentiellement : tirée, masse volumique du matelas fini, taux de liant et caractéristiques des fibres unitaires, diamètre et longueur.

Les tests destinés à évaluer la répartition du liant dans le produit fini, c'est à dire à évaluer les résultats des essais, sont de deux natures, l'un est une observation optique et l'autre un test d'arrachement.

L'aspect optique est évalué par une mesure de la couleur à la surface du matelas terminé. La couleur est mesurée en coordonnées trichromatiques L*a*b*. Le colorimètre est de la Société MINOLTA, type CR 100 qui mesure une surface circulaire de 8 mm de diamètre en réflexion. Sur un panneau de 1 m x 1 m on sélectionne 30 points de mesures régulièrement espacés. Comme le liant donne au produit une couleur jaune, ce sont seulement les coordonnées L* (luminance) et b* (bleu) qui sont relevées. La mesure consiste à calculer le pourcentage des points de mesure pour lesquels L* est supérieur à 0,62 et b* inférieur à 0,20. Ces limites sont celles qui séparent une zone où le liant manque (une « mèche blanche ») et une zone où le liant est normalement déposé. Le pourcentage calculé fournit le « taux de mèches blanches ».

Le test d'arrachement sert à déterminer la résistance à la traction du produit fini perpendiculairement aux faces du matelas, il est effectué selon la norme CEN/TC 88. On prélève sur la largeur de la ligne de production 16 échantillons carrés de 10 x 10 cm$^2$ régulièrement répartis sur la largeur. On colle sur chacune des faces une plaquette de plâtre préfabriqué de 10 mm d'épaisseur. Puis, après prise de la colle, on introduit les échantillons un par un dans un dynamomètre INSTRON et l'on enregistre la force au moment de la rupture lorsqu'on tire sur une face alors que l'autre reste fixe.

La résistance à l'arrachement en kN/m$^2$ σ est :

$$\sigma = 10^{-3} \, F/S$$

où F est la force mesurée en Newtons et S la surface (0,01 m$^2$).

La mesure du « taux de mèches blanches » a été faite sur 3 essais différents et sur une production de référence. La production était celle d'une masse volumique de 45,5 kg/m$^3$, la quantité de liant dans le produit fini était de 3,1 %, et le taux de mèches blanches de 22 %.

Les trois essais selon l'invention étaient effectués dans les conditions suivantes :

1. Rotation seule

Toutes les buses de la couronne étaient équipées du guide rotatif constitué par la tige hélicoïdale de la figure 3, le liant était apporté de manière traditionnelle par le centre des roues de centrifugation 10, 11 et 12.

2. Arrivée de liant dans les buses

Aucune des buses 9 ne comporte de guide rotatif. Des tubes d'arrivée de liant sont installés sur toutes les buses comprises entre la 8ème et la 15ème et entre la 23ème et la 25ème, la numérotation des buses de la figure 1 étant effectuée dans le sens positif, la première étant en haut et à gauche de la figure. 70 % du liant était apporté au centre des roues de centrifugation et 30 % par les buses.

3. Rotation et arrivés de liant dans les buses

Il s'agit de la combinaison des deux moyens ci-dessus : toutes les buses sont équipées de guides rotatifs et les buses 8 à 15 et 23 à 25 de tubes d'arrivée de liant (même proportion que ci-dessus).

Les résultats figurent dans le tableau :

|  | Masse volumique kg/m$^3$ | % liant | Taux de mèches blanches |
|---|---|---|---|
| Référence | 45,5 | 3,1 | 22 % |
| Rot. seule | 47,9 | 2,7 | 15 % |
| Liant seul | 43,4 | 3,3 | 13 % |
| Rot. + Liant | 46,3 | 3,2 | 3 % |

Ces résultats montrent ainsi que chacun des deux moyens proposés, la rotation et l'apport de liant extérieur, est efficace lorsqu'il est seul (respectivement 32% et 41% d'amélioration) et que leur combinaison apporte davantage (pratiquement : disparition des « mèches blanches »)

On a par ailleurs vérifié les excellents résultats obtenus avec la combinaison des deux systèmes en faisant une mesure d'arrachement lors d'une autre campagne d'essais au cours de laquelle la masse volumique était double de ce qu'elle était ci-dessus.

Les résultats sont également résumés dans un tableau :

|  | Masse volumique kg/m$^3$ | Epaisseur mm | % liant | Arrachement kPa |
|---|---|---|---|---|
| Référence | 84,3 | 80,1 | 4,20 | 6,7 |
| Essais | 82,4 | 80,2 | 4,55 | 7,8 |

On constate une amélioration de 16 % de la tenue à l'arrachement.

Ainsi, aussi bien l'aspect visuel (taux de mèches blanches) que les performances mécaniques (arrachement) sont nettement améliorés grâce au procédé de l'invention.

Cette meilleure répartition de liant, en plus de la tenue mécanique du matelas terminé présente un autre avantage : elle donne une meilleure cohésion au matelas en formation. Ceci est particulièrement intéressant lorsque les matelas sont fabriqués en deux étapes, constitution d'une première nappe primaire, aussi mince que possible puis dépôt de plusieurs épaisseurs de la nappe primaire en zigzag perpendiculairement à l'axe du matelas définitif. Les performances du matelas terminé sont d'autant meilleures que le nombre de nappes primaires est grand c'est-à-dire, toutes choses égales par ailleurs, que leur épaisseur unitaire est plus faible.

Les essais ont montré que, tandis qu'avec une production habituelle on était limité vers le bas pour la masse surfacique de la nappe primaire (en dessous de cette valeur minimale, la nappe se déchire et des trous apparaissent), l'invention permet, elle, de descendre très facilement dans les mêmes conditions de production vers des valeurs plus faibles d'au moins 30 %, c'est-à-dire que la nappe primaire est plus mince de 30 % ce qui permet d'améliorer sensiblement la qualité du matelas terminé.

**Revendications**

1.  Procédé de formation de fibres minérales dans lequel un matériau fondu est versé sur la périphérie de roues de centrifugation à axes sensiblement horizontaux où les fibres sont formées par centrifugation puis projetées dans une direction sensiblement parallèle à l'axe par un courant gazeux principal émis autour de la série de roues de centrifugation sur au moins une partie de la périphérie des roues, ledit courant gazeux principal étant formé par du gaz expulsé tangentiellement à la périphérie des roues par une fente, et dans lequel un courant gazeux auxiliaire est généré à distance des roues de centrifugation permettant de contrôler les conditions de transport des fibres, avec sensiblement la même direction que le courant gazeux principal, ledit courant gazeux auxiliaire étant constitué par des gaz soufflés par des buses constituant une couronne, et dans lequel un liant liquide est projeté sur les fibres, du liant étant expulsé du centre des roues de centrifugation, **caractérisé en ce que** du liant liquide est en outre introduit par l'intérieur du courant gazeux auxiliaire constitué de courants individuels par des arrivées de liant associées à certaines des buses de la couronne, pour être projeté sur les fibres.

2.  Procédé selon la revendication 1, **caractérisé en ce que** l'apport de liant dans le courant gazeux auxiliaire se fait principalement en dessous des roues de centrifugation fibreuses.

3.  Procédé selon la revendication 1 ou la revendication 2, **caractérisé en ce que** la majeure partie du liant est introduite au centre des roues de centrifugation et répartie par force centrifuge.

4.  Procédé selon la revendication 3, **caractérisé en ce que** de l'ordre de 30 % du liant liquide est introduit par l'intérieur de courants gazeux auxiliaires et le reste par le centre de roues de centrifugation.

5.  Procédé selon l'une des revendications précédentes, **caractérisé en ce que** le courant gazeux auxiliaire est constitué de courants individuels dont notamment certains sont tournants.

6.  Dispositif pour former des fibres minérales comportant des roues de centrifugation à axe sensiblement horizontal sur la périphérie desquels est versé un matériau fondu, une fente par où est expulsée tangentiellement à la périphérie des roues du gaz formant un courant gazeux principal, cette fente étant alimentée au moins localement par une source de gaz, et des buses, également alimentées par une source de gaz et par où des gaz sont également soufflés pour constituer un courant gazeux secondaire, étant situées autour de la fente et constituant une couronne tandis qu'un système d'alimentation en liant au centre de roues de centrifugation le projette radialement, **caractérisé en ce que** certaines des buses de la couronne du courant gazeux auxiliaire situées autour de la fente comportent des tubes d'amenée de liant liquide.

7.  Dispositif selon la revendication 6, **caractérisé en ce que** notamment certaines des buses comportent des guides rotatifs.

8.  Dispositif selon la revendication 7 **caractérisé en ce que** les guides sont faits d'une tige hélicoïdale.

9.  Dispositif selon la revendication 7, **caractérisé en ce que** les guides sont des vis d'Archimède.

10. Dispositif selon la revendication 7, **caractérisé en ce que** les guides comportent une pale mobile entraînée en rotation.

**Claims**

1.  A method for forming mineral fibres in which a molten material is poured onto the periphery of centrifuging wheels with substantially horizontal axes where the fibres are formed by centrifuging then projected in a direction substantially parallel to the axis by a main gaseous flow emitted around the series of centrifuging wheels over at least part of the periphery of the wheels, said main gaseous flow being formed by gas expelled tangentially to the periphery of the wheels via a slot, and wherein an auxiliary gaseous flow is generated at a distance from the centrifuging wheels, allowing to control the conditions for conveying the fibres, having substantially the same direction as the main gaseous flow, said auxiliary gaseous flow being formed by gases blown through nozzles making up a ring, and wherein a liquid binder is sprayed onto the fibres, some binder being expelled from the centre of the centrifuging wheels, **characterised in that** liquid binder is furthermore introduced via the interior of the auxiliary gaseous flow consisting of individual flows, by supplies of binder associated with some of the nozzles in the ring, in order to be sprayed onto the fibres.

2. A method according to claim 1, **characterised in that** the conveying of the binder in the auxiliary gaseous flow occurs mainly below the fibre centrifuging wheels.

3. A method according to claim 1 or claim 2, **characterised in that** the major part of the binder is introduced at the centre of the centrifuging wheels and distributed by centrifugal force.

4. A method according to claim 3, **characterised in that** of the order of 30% of the liquid binder is introduced from inside auxiliary gaseous flows and the remainder through the centre of centrifuging wheels.

5. A method according to any one of the preceding claims, **characterised in that** the auxiliary gaseous flow consists of individual flows of which some especially are rotating flows.

6. A device for forming mineral fibres including centrifuging wheels with substantially horizontal axis onto the periphery of which a molten material is poured, a slot via which gas making up a main gaseous flow is expelled tangentially to the periphery of the wheels, said slot being fed at least locally by a source of gas, and nozzles, also fed by a source of gas, and from which gases are also blown in order to make up an auxiliary gas flow, said nozzles being located around the slot and making up a ring, while a system for feeding binder at the centre of centrifuging wheels projects it radially, **characterised in that** some of the nozzles of the ring of the auxiliary gas flow located around the slot have liquid binder supply tubes.

7. A device according to claim 6, **characterised in that** some especially of the nozzles include rotatory guides.

8. A device according to claim 7, **characterised in that** the guides are made of a helical rod.

9. A device according to claim 7, **characterised in that** the guides are Archimedean screws.

10. A device according to claim 7, **characterised in that** the guides include a movable blade driven in rotation.

**Patentansprüche**

1. Verfahren zum Bilden von Mineralfasern, bei dem ein Schmelzematerial auf den Umfang von Schleuderrädern mit im wesentlichen horizontalen Achsen gegossen wird, wobei die Fasern durch Zentrifugieren ausgebildet und daraufhin durch einen Hauptgasstrom, der um die Reihe von Schleuderrädern auf mindestens einen Teil des Umfangs der Räder abgegeben und durch tangential am Umfang der Räder durch einen Schlitz austretendes Gas gebildet wird, in eine zur Achse im wesentlichen parallele Richtung verblasen werden, bei dem ein Nebengasstrom im Abstand von den Schleuderrädern mit im wesentlichen der gleichen Richtung wie der Hauptgasstrom erzeugt wird, wodurch die Bedingungen des Fasertransports steuerbar sind und wobei der Nebengasstrom durch einen Kranz formende Düsen einzelnen Gasströmen gebildet ist, und bei dem ein flüssiges Bindemittel, welches aus dem Zentrum der Räder ausgestoßen wird, auf die Fasern versprüht wird, ***dadurch gekennzeichnet, dass*** flüssiges Bindemittel zum Versprühen auf die Fasern unter anderem über den Nebengasstrom, der aus den einzelnen Strömen gebildet ist, eingebracht wird, wobei das Bindemittel über Zuführungen an bestimmte Düsen des Kranzes aufgegeben wird.

2. Verfahren nach Anspruch 1, **dadurch gekennzeichnet, dass** die Einbringung von Bindemittel in den Nebengasstrom hauptsächlich unterhalb der Faserschleuderräder stattfindet.

3. Verfahren nach Anspruch 1 oder 2, **dadurch gekennzeichnet, dass** der überwiegende Teil des Bindemittels in der Mitte der Schleuderräder eingeführt und mittels Zentrifugalkraft verteilt wird.

4. Verfahren nach Anspruch 3, **dadurch gekennzeichnet, dass** in der Größenordnung von 30% des flüssigen Bindemittels über das Innere von Nebengasströmen und der Rest über die Mitte der Schleuderräder eingeführt wird.

**5.** Verfahren nach einem der vorhergehenden Ansprüche, **dadurch gekennzeichnet, dass** der Nebengasstrom aus Einzelströmen besteht, von denen insbesondere bestimmte drehen.

**6.** Vorrichtung zum Bilden von Mineralfasern, mit Schleuderrädern mit im wesentlichen horizontalen Achsen, auf deren Umfang ein Schmelzematerial gegossen wird, einem Schlitz, durch den tangential am Umfang der Räder ein Hauptgasstrom ausgestoßen wird, wobei der Schlitz zumindest örtlich begrenzt durch eine Gasquelle versorgt wird, und Düsen, welche um den Schlitz herum angeordnet sind und einen Kranz formen und die ebenfalls durch eine Gasquelle versorgt werden, wobei durch die Düsen ein zweiter Gasstrom ausgestoßen wird, während ein System zur Versorgung mit Bindemittel in der Mitte der Schleuderräder dieses in Radialrichtung versprüht, **dadurch gekennzeichnet, dass** bestimmte der um den Schlitz herum angeordneten Düsen Röhren zum Zuführen von flüssigem Bindemittel aufweisen.

**7.** Vorrichtung nach Anspruch 6, **dadurch gekennzeichnet, dass** insbesondere bestimmte der Düsen drehende Führungen aufweisen.

**8.** Vorrichtung nach Anspruch 7, **dadurch gekennzeichnet, dass** die Führungen aus einer Wendelstange bestehen.

**9.** Vorrichtung nach Anspruch 7, **dadurch gekennzeichnet, dass** die Führungen archimedische Schrauben sind.

**10.** Vorrichtung nach Anspruch 7, **dadurch gekennzeichnet, dass** die Führungen eine bewegliche, drehend angetriebene Schaufel aufweisen.

**Fig. 1**

**Fig. 2**

**Fig. 3**

**EP 0 801 635 B2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 59152 A
- EP 195725 A
- EP 439385 B
- EP 59152 B
- EP 374112 A
- EP 438385 B